# EUROPEAN PATENT SPECIFICATION

(11) **EP 3 438 542 B1**
(45) Date of publication and mention of the grant of the patent: **17.11.2021**
(21) Application number: 17382537.3
(22) Date of filing: 02.08.2017
(51) Int. Cl.: F24C 3/12, F23N 1/00

(54) **GAS VALVE COMPRISING A TACTILE FEEDBACK DEVICE, AND COOKING APPLIANCE COMPRISING SAID GAS VALVE**
GASVENTIL MIT VORRICHTUNG FÜR TAKTILES FEEDBACK UND KOCHGERÄT MIT DIESEM GASVENTIL
SOUPAPE DE GAZ COMPRENANT UN DISPOSITIF DE RÉTROACTION TACTILE ET APPAREIL DE CUISSON COMPORTANT LADITE SOUPAPE DE GAZ

(43) Date of publication of application: 06.02.2019
(73) Proprietor: Copreci, S.Coop., 20550 Aretxabaleta (ES)
(72) Inventor: CIARDEGUI IRIARTE, Aitor, 20550 Aretxabaleta (ES); CALDERON SANCHEZ, Jon, 20700 Zumarraga (ES); ZELAIA FERNANDEZ DE CACHO, Carmelo, 48012 Bilbao (ES)
(74) Representative: Igartua, Ismael

(56) References cited:
- EP-A1- 2 735 795
- EP-A1- 2 889 539
- EP-A2- 2 741 007
- WO-A1-2015/097119
- US-A1- 2010 035 195

## Description

### TECHNICAL FIELD

The present invention relates to gas valves comprising a tactile feedback device, and to cooking appliances comprising said gas valves.

### PRIOR ART

Gas valves for cooking appliances comprising tactile feedback means whereby users perceive a tactile sensation when turning the knob associated with the shaft of the valve are known. To that end, the valve must comprise an element rotating integrally with the shaft of the valve and cooperating with a fixed element to generate said tactile sensation.

Gas valves with tactile feedback means inside the valve body are known. US2005/0284519A1 and EP2735795A1 describe gas valves with tactile feedback means inside the valve body. Unlike the gas valve of EP2735795A1, in the gas valve of US2005/0284519A1 the tactile sensation is not associated with angular positions corresponding to different gas adjustment levels.

WO2015097119A1 describes a cooking appliance which comprises a gas valve comprising a tactile feedback device arranged outside the valve body. This gas valve comprises an axially movable rotating shaft coupled to a gas flow regulating member arranged in the valve body, the gas flow through the valve being changed by means of rotation of the shaft. The tactile feedback device comprises a fixed portion which is formed by two covers coupled to one another defining an inner space and with the shaft going through said covers, and a rotating portion, which is a sleeve coupled to the shaft, rotating integrally with said shaft and housed in the inner space defined by the covers of the fixed portion, the shaft being axially movable with respect to the assembly formed by the fixed portion and the rotating portion. The fixed portion comprises a follower, which is a spring and ball assembly arranged in the lower cover of the fixed portion, arranged radially with respect to the shaft, and the rotating portion comprises a circular guide section comprising a plurality of contiguous housings arranged in a side wall of the sleeve, and guiding the follower to provide a tactile sensation during rotation of the shaft.

EP2889539A1 discloses a gas valve for a cooking appliance, comprising a tactile feedback device, the valve comprising a valve body and an axially movable rotating shaft coupled to said valve body. The gas flow through the valve is changed by means of rotation of the shaft, and the tactile feedback device comprises a fixed portion and a rotating portion rotating integrally with the shaft, the fixed portion comprising a follower arranged radially with respect to the shaft and the rotating portion comprising a circular guide section which comprises a plurality of contiguous housings and guides the follower to provide a tactile sensation during rotation of the shaft. The tactile feedback device is arranged inside the valve body.

### DISCLOSURE OF THE INVENTION

The object of the invention is to provide a gas valve comprising a tactile feedback device and a cooking appliance comprising said gas valve, as defined in the claims.

The gas valve of the invention comprises a tactile feedback device, the valve comprising a valve body and an axially movable rotating shaft coupled to said valve body, the gas flow through the valve being changed by means of rotation of the shaft, and the tactile feedback device comprising a fixed portion and a rotating portion rotating integrally with the shaft, one of said portions comprising at least one follower arranged radially with respect to the shaft, and the other one of said portions comprising at least one circular guide section comprising a plurality of contiguous housings and guiding the follower to provide a tactile sensation during rotation of the shaft.

The tactile feedback device is arranged outside the valve body. The fixed portion of the tactile feedback device comprises a base fixed to the valve body and the rotating portion comprises a support fixed to the shaft of the valve, such that the rotating portion, in addition to rotating integrally with the shaft of the valve, moves integrally with said shaft in an axial manner.

In the gas valve of the invention, since the base of the fixed portion is fixed to the valve body and the support of the rotating portion is fixed to the shaft of the valve, the gas valve-tactile feedback device assembly can be supplied without having to fix the tactile feedback device to the gas valve or assemble both parts later on, and furthermore the operation of fixing the tactile feedback device to the cooking appliance will not be necessary when assembling the gas valve in the cooking appliance. On the other hand, since the support of the rotating portion of the tactile feedback device is fixed to the shaft of the gas valve, additional means for securing the rotating portion do not have to be included because it is already secured to the shaft of the valve. In the state of the art, since the rotating portion is fixed to the shaft of the valve only during rotation, the fixed portion must incorporate a first cover for housing the rotating portion and a second cover for closing said housing. Therefore, the result is a compact tactile feedback device with fewer parts than the device of the state of the art, all this leading to lower costs.

These and other advantages and features of the invention will become evident in view of the drawings and detailed description of the invention.

### DESCRIPTION OF THE DRAWINGS

Figure 1 shows a front view of a first embodiment of the gas valve according to the invention.
Figure 2 shows an exploded perspective view of the gas valve of Figure 1.
Figure 3 shows a bottom perspective view of the support of the tactile feedback device of the gas valve of Figure 1.
Figure 4a shows a perspective view of the base of the tactile feedback device of the gas valve of Figure 1.
Figures 4b-d show perspective views of other embodiments of the base of the tactile feedback device which may replace the base of Figure 4a in the gas valve of Figure 1.
Figure 5 shows a bottom perspective view of an embodiment of the support of the tactile feedback device which may replace the support of Figure 3 in the gas valve of Figure 1.
Figure 6 shows a perspective view of another embodiment of the base of the tactile feedback device, which may replace the base of Figure 4a in the gas valve of Figure 1 together with the support of Figure 7.
Figure 7 shows a top perspective view another embodiment of the support of the tactile feedback device, which may replace the support of Figure 3 in the gas valve of Figure 1 together with the base of Figure 6.
Figure 8 shows a bottom perspective view of the support of Figure 7.
Figure 9 shows a front view of a second embodiment of the gas valve according to the invention.
Figure 10 shows an exploded perspective view of the gas valve of Figure 9.
Figure 11 shows a bottom perspective view of the support of the tactile feedback device of the gas valve of Figure 9.
Figure 12 shows a top perspective view of the base of the tactile feedback device of the gas valve of Figure 9.
Figure 13 shows a top perspective view of another embodiment of the base of the tactile feedback device which may replace the base of Figure 12 in the embodiment of Figure 9.
Figure 14 shows a top perspective view of the base of Figure 13, with the integral case of the follower with the cover open.

### DETAILED DISCLOSURE OF THE INVENTION

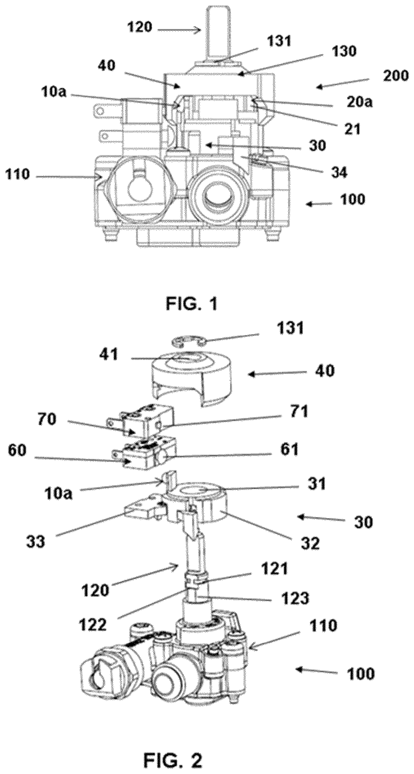

Figure 1 shows a front view of a first embodiment of the gas valve 100 according to the invention, and Figure 2 shows an exploded perspective view of the gas valve 100 of Figure 1.

The gas valve 100 of the invention comprises a tactile feedback device 200 arranged outside said gas valve 100. Said gas valve 100 comprises a valve body 110 and an axially movable rotating shaft 120 coupled to said valve body 110. The valve body 110 comprises therein a cavity in which a frustoconical gas flow regulating member (not shown in the drawings) is arranged between a gas inlet and a gas outlet of the gas valve 100. The shaft 120 is coupled to the gas regulating member such that gas flow through the valve 100 is changed by means of the rotation of said shaft 120. The gas valve 100 further comprises a spring arranged in the cavity of the gas body 110 which allows for the shaft 120 to return to its initial position after having been pushed axially.

The tactile feedback device 200 comprises a fixed portion and a rotating portion rotating integrally with the shaft 120, in this embodiment of the gas valve 100 the fixed portion comprises a follower 10a arranged radially with respect to the shaft 120, and the rotating portion comprises a circular guide section 20a which comprises a plurality of contiguous housings 21 and guides the follower 10a to provide a tactile sensation during rotation of the shaft 120. The fixed portion comprises a base 30 which comprises the follower 10a and is fixed to the valve body 110, and the rotating portion comprises a support 40 which comprises the guide section 20a and is fixed to the shaft 120 of the valve 100, the support 40 being a cover in this embodiment. Therefore, the support 40 rotates when the shaft 120 rotates, and the support 40 moves axially when the shaft 120 moves axially.

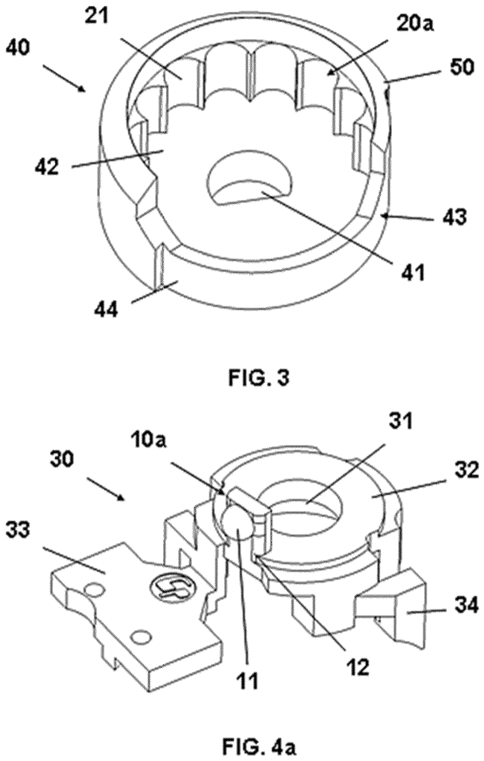

Figure 3 shows a bottom perspective view of the support 40 of the tactile feedback device 200 of the gas valve 100 of Figure 1, and Figure 4a shows a perspective view of the base 30 of the tactile feedback device 200 of the gas valve 100 of Figure 1.

This embodiment of the tactile feedback device 200 comprises an internally hollow support 40, as shown in Figure 3, with a substantially cylindrical shape and without a lower wall. The support 40 comprises a cover or upper wall with the shaft 120 of the valve 100 going through same. This cover comprises an opening 41 for the fitting and coupling of the shaft 120. To that end, the shaft 120 of the valve body 110 comprises in the outer portion thereof a machined D-shaped segment 123 which is arranged below another machined segment of the shaft 120 used for assembling the knob of the gas valve 100, and the opening 41 also having a D shape, the support being coupled to the shaft 120 when the segment 123 of the shaft 120 is introduced in the opening 41. The base 30 of this embodiment of the tactile feedback device 200 as shown in Figure 4a, comprises a first substantially cylindrical area 32 with the shaft 120 going through an opening 31 thereof without any coupling whatsoever, and a second substantially rectangular area 33, both areas 32 and 33 being attached to one another. The base 30 also comprises engagement means 34 for fixing the base 30 to the valve body 110, which engagement means 34 comprise hooks projecting from the first area 32 and engaging the protrusions of the valve body 110. The second area 33 of the base 30 is supported on the valve body 110. The support 40 also comprises a perimetral wall 43 which is prolonged from the cover to the first area 32 of the base 30, said perimetral wall 43 demarcating a housing in which the follower 10a and the guide section 20a are housed.

The support 40 is fixed to the shaft 120 by fixing means 130 of the gas valve 100. The fixing means 130 comprise a circlip 131 or washer arranged in a perimetral groove 121 of the shaft 120 arranged below the machined segment of said shaft 120 envisaged for assembling the knob of the gas valve 100, and a milled segment 122 in the shaft 120 below the groove 121. The support 40 is assembled on the shaft 120 with an inner face 42 of the cover abutting the milled segment 122 of the shaft 120, and the circlip 131 is assembled on the groove 121 abutting the outer face of the cover of the support 40.

In this embodiment of the support 40 shown in Figure 3, the follower 10a is arranged on the edge of the first area 32 of the base 30, and the guide section 20a is arranged on the inner face of the perimetral wall 43 of the support 40. The base 30 and the support 40 are preferably plastic parts, the follower 10a and the guide section 20a being integral with the base 30 and the support 40, respectively. The follower 10a therefore comprises a contact element 11 which in this embodiment is in the form of a ball, contacting the guide section 20a. The follower 20a is fixed and attached to the first area 32 of the base 30 by means of an elastic element 12 which is a thinner plastic wall attached to the first area 32. The guide section 20a is arranged in an angular segment of the inner face of the perimetral wall 43 at an angle at least equal to the angular range of actuation of the shaft 120 for regulating gas flow between an OFF position for preventing gas flow, in which the contact element 11 of the follower 20a is arranged in one of the housings 21, and an ON position for allowing gas flow between a maximum position and a minimum position, passing through an intermediate gas flow position, in which a plurality of housings 21 are arranged. Said guide section 20a guides the contact element 11 of the follower 10a to provide a tactile sensation. In the embodiment shown in Figure 1, the contact element 11 can be housed in each of the housings 21, such that each of the housings 21 defines a gas flow adjustment level. In the axial movement of the shaft 120, and therefore of the support 40, the contact element 11 always contacts a housing 21 of the guide section 20a.

In a preferred embodiment, the support 40 of the tactile feedback device 200 is configured to push an activation pushbutton 61 when said support 40 moves axially towards the valve body 110 together with the shaft 120 of the gas valve 100. The support 40 therefore performs two functions, forming the rotating portion of the tactile feedback device 200 on one hand and serving for activating a pushbutton 61 when it moves axially on the other.

In this embodiment of the gas valve 100, a switch 60 is arranged in the second area 33 of the base 30. In this embodiment, this switch 60 is a switch for a spark generator which allows activating an ignition valve for igniting a gas burner (not shown in the drawings) corresponding to said gas valve 100. Said switch 60 comprises the activation pushbutton 61 projecting from the case of the switch 60 towards the shaft 120 of the gas valve 100, the activation thereof allowing the activation of the spark generator. The pushbutton 61 is arranged in a manner orthogonal to the direction of the shaft 120 of the gas valve 100, and located on a vertical plane coinciding with the axial path of the support 40. The support 40 of the tactile feedback device 200 is configured so that the perimetral wall 43 pushes the activation pushbutton 61 when said support 40 moves axially towards the valve body 110, together with the shaft 120 of the gas valve 100, when said shaft 120 is pushed axially for opening the gas valve 100 and igniting the gas burner.

In a preferred embodiment, the support 40 of the tactile feedback device 200 furthermore performs an additional function since it is configured to push an activation pushbutton 71 when said support 40 rotates together with the shaft 120 of the gas valve 100.

Therefore, in the embodiment of the gas valve 100 of Figure 1 a switch 70 is arranged assembled on switch 60. In this embodiment, this switch 70 is a switch for auxiliary mechanisms of the cooking appliance where the gas valve 100 is assembled. Therefore, if the cooking appliance is a cooking oven, for example, it allows activating a light bulb in the oven, a fan, the extractor hood, etc. Said switch 70 comprises the activation pushbutton 71 which is operated by means of the support 40 when it is rotated. This pushbutton 71 projects from the case of the switch 70 towards the shaft 120 of the gas valve 100, the activation thereof allowing the activation of the auxiliary mechanisms mentioned above. The pushbutton 71 is arranged in a manner orthogonal to the direction of the shaft 120 of the gas valve 100, and located on a vertical plane which is farther away with respect to the axial path of the support 40. Therefore, when the support 40 moves axially, it only pushes the pushbutton 61, activating the switch 60.

The support 40 of the tactile feedback device 200 comprises a cam 50 configured to push the activation pushbutton 71 when said support 40 rotates together with the shaft 120 of the gas valve 100. After the shaft 120 has been pushed axially for opening the gas valve 100, said shaft 120 is rotated, and as a result of the inner spring of the gas valve 100, the shaft 120 moves axially backwards, such that the perimetral wall 43 of the support 40 can no longer push the pushbutton 61 of the switch 60. In this embodiment, the cam 50 of the support 40 is integral with said support 40, forming part of the outer face of the perimetral wall 43, projecting from the surface 44 of said perimetral wall 43. This cam 50 is formed in an angular range of the periphery of the perimetral wall 43, said angular range corresponding at least to the range for allowing gas flow in the gas valve 100, and being smaller than the angular range of actuation of said gas valve 100. Therefore, when the shaft 120 is rotated, the cam 50 pushes the pushbutton 71 in specific angular positions.

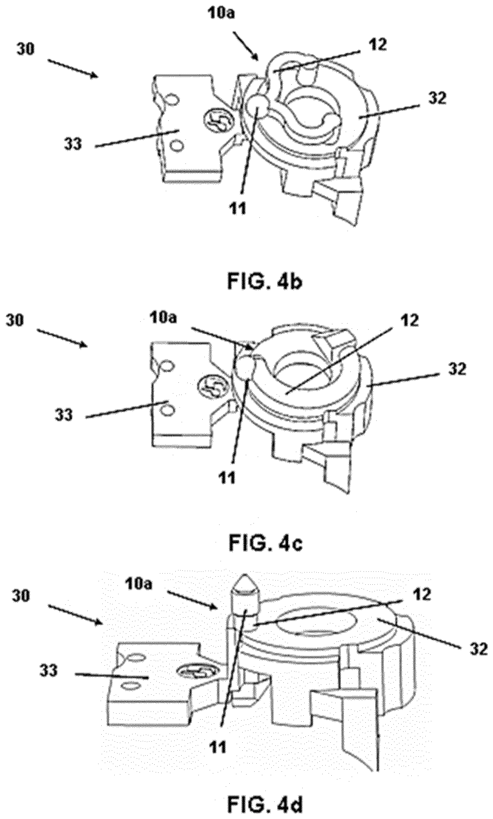

Figures 4b-d show perspective views of other embodiments of the base 30 of the tactile feedback device which may replace the base of Figure 4a in the gas valve of Figure 1. Each of said embodiments differs from the others in terms of how the follower 10a arranged in the first area 32 of the base 30 is configured.

In this sense, the follower 10a shown in Figure 4b comprises a contact element 11 which is also a ball, and the elastic element 12 is a part integral with the contact element 11, formed by two C-shaped flanges projecting from opposite areas of the first area 32, and converging in the contact element 11, said contact element 11 being a floating element.

The follower 10a shown in Figure 4c comprises a contact element 11 which is a ball, and the elastic element 12 is a part integral with the contact element 11, formed by a C-shaped flange projecting from the first area 32 opposite the location of the contact element 11, said contact element 11 being a floating element.

The follower 10a shown in Figure 4d comprises a contact element 11 which is a hollow cylinder, and the elastic element 12 is a part separated from the contact element 11 and is solid and has a cylindrical shape, projecting vertically from the first area 32, the hollow cylinder being clipped in the elastic element 12 and having rotational freedom. Therefore, when the follower 10a contacts the guide section 20a of the perimetral wall of the support 40, said guide section 20a rotates in one direction, and the contact element 11 rotates in the opposite direction, the wear and tear of the parts thus being minimized. All the parts of the base 30 in all the described embodiments are preferably made of plastic.

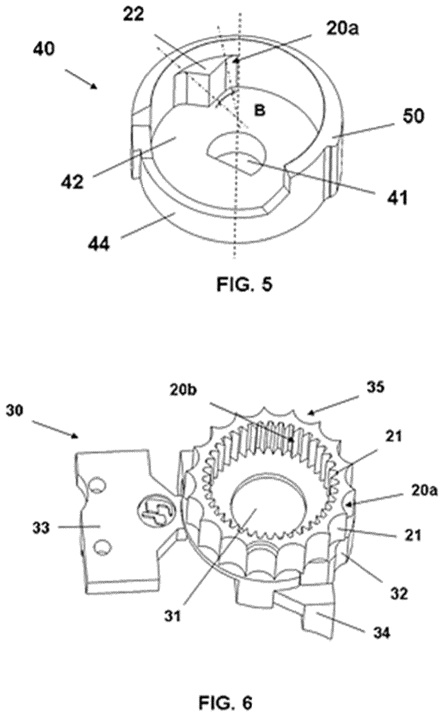

Figure 5 shows a bottom perspective view of an embodiment of the support 40 of the tactile feedback device 200 which may replace the support 40 of Figure 3 in the gas valve 100 of Figure 1.

Said support 40 comprises the same features as those described for the embodiment of the support 40 shown in Figure 3. The difference lies in the fact that the guide section 20a, in addition to comprising a plurality of housings 21, comprises a segment 22 projecting from the inner face of the perimetral wall 43 of the support 40, although in Figure 5 only the segment 22 is shown, not the housings 21. This segment 22 projects farther and has a larger dimension than the peaks defining the housings 21. This segment 22 defines an angular area B with the longitudinal axis of the shaft 120, in which the follower 10a of the base 30 cannot be positioned, i.e., the follower will not be stable in said segment 22, the shaft 120 moving out of the angular position B. Therefore, when the user rotates the shaft 120 of the gas valve 100 and wants to place the shaft 120 in the angular position B of the segment 22, this cannot be done because the contact element 11 of the follower 10a moves, sliding to one side or another, out of the segment 22. This function of the segment 22 is extremely suitable for cooking appliances comprising at least one burner with more than one crown for burning gas, for example a double-crown burner, preventing the effect of unburned gas which may occur when rotating the shaft to switch the gas flow from one crown of the burner to the other, and to angularly place said shaft in a gas outflow position arranged between the gas flow outlet of the two crowns of the gas burner.

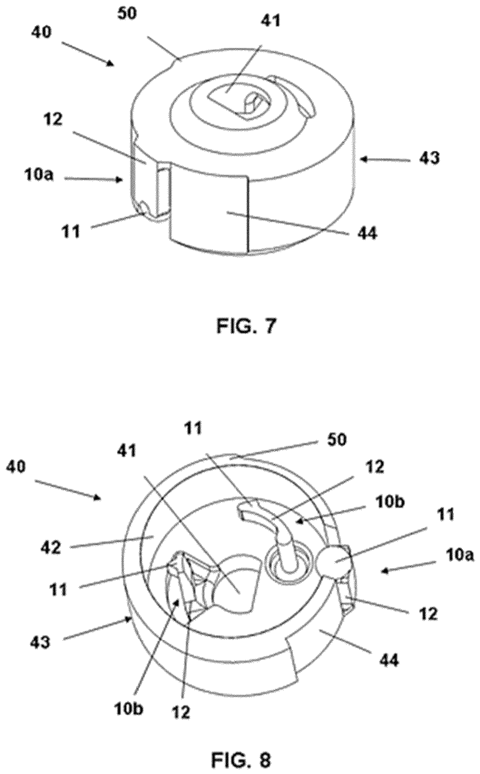

Figure 6 shows a perspective view of the base 30 of another embodiment of the tactile feedback device 200 of the gas valve 100 of Figure 1 which cooperates with the support 40 shown in Figures 7 and 8.

In this embodiment of the tactile feedback device 200, the follower 10a is arranged fixed to the inside of the support 40, and the guide section 20a is arranged in a side wall of a platform 35 arranged on the first area 32 of the base 30. The other features of the gas valve 100 are the same as those described above. The base 30 comprises the same features as the base of the first embodiment of the tactile feedback device 200, with the difference that in this embodiment there is arranged on the first area 32 the platform 35 having a ring shape with a central hole which the shaft 120 goes through. The housings 21 of the guide section 20a are arranged in the outer side wall of said ring, such that they can elastically contact the follower 10a. The contact element 11 of said follower 10a can therefore be housed in each of the housings 21, such that each of the housings 21 defines a gas flow adjustment level. However, the embodiment of the base 30 that is shown comprises a second guide section 20b guiding a second follower 10b. This second guide section 20b is arranged in the inner side wall of the ring forming the platform 35. In this embodiment, this second guide section 20b comprises a plurality of housings 21 with a dimension smaller than the housings 21 of the guide section 20a. Obviously in another embodiment of the tactile feedback device that is not shown in the drawings, the base can comprise a guide section in the outer or inner side wall of the platform of the base, said guide section being configured for obtaining a gas flow adjustment level or for obtaining a tactile sensation.

The support 40 shown in Figures 7 and 8 comprises the same features as the support 40 of the first embodiment of the tactile feedback device 200, with the difference that in this second embodiment the follower 10a comprises an elastic element 12 which is integral with the contact element 11 which is a ball. The elastic element 12 is a sheet running vertically along the perimetral wall 43 from the outer edge of the cover of the support 40, where the existence of two vertical grooves laterally separating the elastic element 12 from the perimetral wall 43 allows said sheet to be elastic. The contact element 11 is arranged at the end of the elastic element 12. In the axial movement of the shaft 120, and therefore of the support 40, the contact element 11 always contacts a housing 21 of the guide section 20a. However, the embodiment of the support 40 that is shown comprises two second followers 10b following the second guide section 20b. These second followers 10b are arranged in different positions projecting from the inner face 42 of the cover of the support 40. In this embodiment, these second followers 10b comprise an elastic element 12 attached at one end to the inner face 42 of the cover, and at the other end to the contact element 11 in the shape of a tip. The dimension of the contact element 11 is adapted to the dimension of the housings 21 of the second guide section 20b, the contact element 11 sliding on the housings 21 of the second guide section 20b, the user perceiving a tactile sensation when the shaft 120 is rotated. Obviously, in another possible embodiment of the tactile feedback device not shown in the drawings, the support can comprise a follower arranged in the perimetral wall or on the inner face of the cover, said follower being configured for obtaining a gas flow adjustment level or for obtaining a tactile sensation.

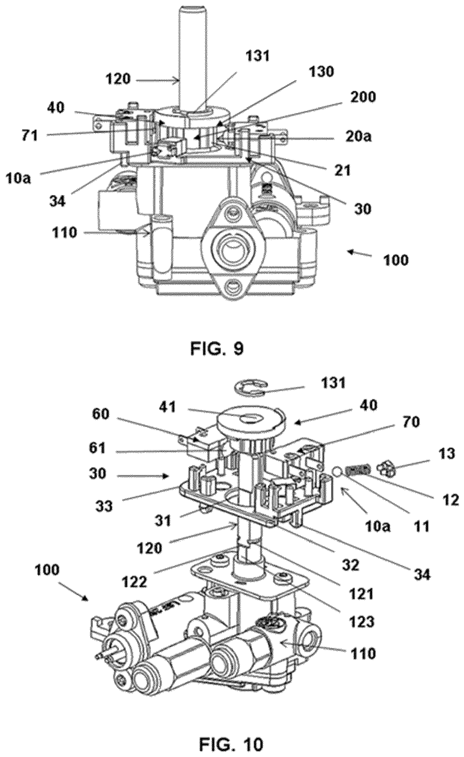

Figure 9 shows a front view of a second embodiment of the gas valve 100 according to the invention, and Figure 10 shows an exploded perspective view of the gas valve 100 of Figure 9. This second embodiment of the gas valve 100 for a cooking appliance is also of the type comprising a tactile feedback device 200 arranged outside said gas valve 100.

The tactile feedback device 200 of this second embodiment also comprises a fixed portion and a rotating portion rotating integrally with the shaft 120, in this second embodiment of the gas valve 100 the fixed portion comprises a base 30 which comprises the follower 10a fixed to the valve body 110, and the rotating portion comprises a support 40 which comprises the guide section 20a fixed to the shaft 120 of the valve 100, the support 40 not being a cover in this case. Therefore, like in the first embodiment, the support 40 rotates when the shaft 120 rotates, and the support 40 moves axially when the shaft 120 moves axially. The base 30 has a shape different from the base 30 of the first embodiment of the gas valve 100, i.e., it is rectangular and has an opening 31 in the central portion which the shaft 120 goes through, and allows axial movement of the support 40 therethrough; and a first area 32 and a second area 33, respectively, are arranged at the sides of the opening 31. It also comprises in the lower portion thereof hooks 34 which allow it to be fixed to the valve body 110.

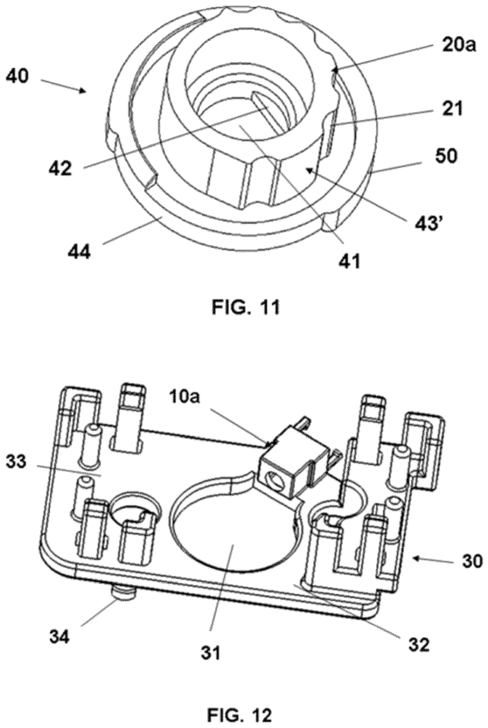

Figure 11 shows a bottom perspective view of the support 40 of the tactile feedback device 200 of the gas valve 100 of Figure 9, and Figure 12 shows a top perspective view of an embodiment of the base 30 of the tactile feedback device 200 of the gas valve 100 of Figure 9, with a follower 10a with a closure clip 13, on which the contact element 11 and the elastic element 12 are not assembled.

The internally hollow support 40 as shown in Figure 11 has a substantially cylindrical shape without any lower wall, and comprises a cover or upper wall projecting from the side wall of the cylinder, with the shaft 120 of the valve 100 going through same. This cover comprises an opening 41 for the fitting and coupling of the shaft 120 such as the one described for the first embodiment of the gas valve 100. The support 40 also comprises in the cylindrical portion thereof a perimetral wall 43' which is prolonged from the cover to the base 30, the outer contour of said perimetral wall 43' comprising the guide section 20a, the follower 10a being arranged in the first area 32 of the base 30.

The support 40 is fixed to the shaft 120 by fixing means 130 of the gas valve 100 similar to those used in the first embodiment of the gas valve 100.

The base 30 and the support 40 are preferably plastic parts, the follower 10a and the guide section 20a being integral with the base 30 and the support 40, respectively. The follower 10a therefore comprises a contact element 11 which is in the form of a steel ball in this embodiment, contacting the guide section 20a arranged on the outer face of the perimetral wall 43' of the support 40. The follower 10a comprises a case also made of plastic which is integral with the base 30. This internally hollow case is fixed and attached to the first area 32 of the base 30. The follower 10a also comprises an elastic element 12 which is a spring separated from the contact element 11.

The case of the follower 10a comprises a circular opening in the front wall which faces the guide section 20a of the support 40, and an opening in the rear wall opposite the front wall. The contact element 11 is introduced until it protrudes partially through the opening of the front wall, and the elastic element 12 is then introduced abutting the contact element 11. The rear wall of the case of the follower 10a is closed with a metal clip 13, the clip 13 comprising protrusions engaging the hooks projecting from the case of the follower 10a. The guide section 20a guides the contact element 11 of the follower 10a to provide a tactile sensation. In the embodiment that is shown, the end of the contact element 11 projecting from the front wall of the case of the follower 10a can be housed in each of the housings 21 of the guide section 20a, such that each of the housings 21 defines a gas flow adjustment level. In the axial movement of the shaft 120, and therefore of the support 40, the contact element 11 always contacts a housing 21 of the guide section 20a.

In this second embodiment of the gas valve 100, there is arranged in the second area 33 of the base 30 a switch 60, which like the one in the first embodiment of the gas valve 100, is a switch for a spark generator which allows activating an ignition valve for igniting a gas burner (not shown in the drawings) corresponding to said gas valve 100. Said switch 60 comprises a pushbutton 61 such as the one described in the first embodiment of the gas valve 100. The support 40 of the tactile feedback device 200 is configured so that the edge of the cover of the support 40 projecting from the perimetral wall 43' pushes the activation pushbutton 61 when said support 40 moves axially towards the valve body 110.

Furthermore in this second embodiment of the gas valve 100, a switch 70 is arranged assembled in the second area 33 of the base 30, opposite the site where the switch 60 is arranged. In this embodiment, this switch 70 is also a switch for auxiliary mechanisms of the cooking appliance where the gas valve 100 is assembled. Said switch 70 comprises an activation pushbutton 71 such as the one described in the first embodiment of the gas valve 100.

In this second embodiment of the gas valve 100, the cam 50 of the support 40 is also integral with the support 40, forming part of the outer face of the cover of said support 40. This cam 50 is formed in an angular range which corresponds at least to the range for allowing gas flow in the gas valve 100 and is smaller than the angular range of actuation of said gas valve 100. Therefore, when the shaft 120 is rotated after having been pushed axially for opening the gas valve 100, the cam 50 pushes the pushbutton 71 in specific angular positions.

In other embodiments of the gas valve 100 not shown in the drawings, instead of being individual and independent switches, the switches 60 and 70 are switches that form part of a harness, such that said harness allows electrically communicating different gas valves comprised in the cooking appliance, so the activation of a switch of the harness allows activating the auxiliary mechanism of the cooking appliance to which it is communicated.

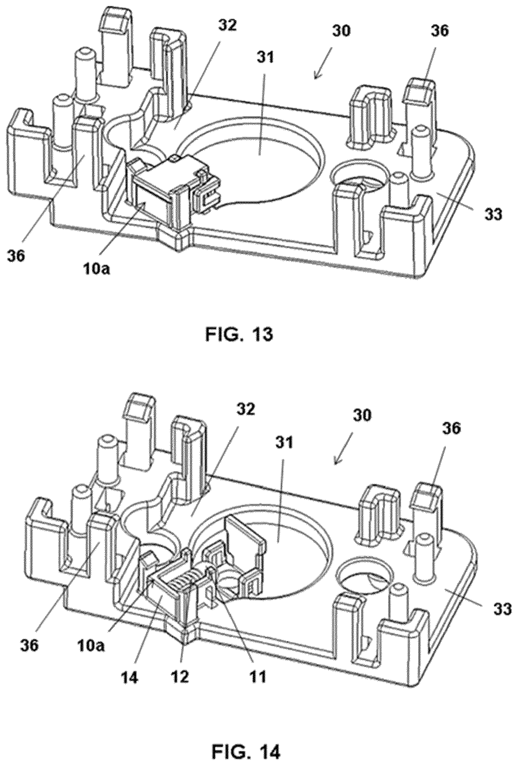

Figure 13 shows a top perspective view of an alternative embodiment of the base 30 of the tactile feedback device 200 for the gas valve 100 of Figure 9, with a follower 10a comprising a integral case 14 with the cover closed, and Figure 14 shows a top perspective view of the base 30 of Figure 13, with the integral case 14 of the follower 10a with the cover open.

This alternative embodiment of the base 30 of the second embodiment of the gas valve 100 is substantially the same as the base 30 of the first embodiment, with differences in terms of the follower 10a which are described below.

The follower 10a also comprises a contact element 11 such as the one of the first embodiment, contacting the guide section 20a arranged on the outer face of the perimetral wall 43' of the support 40. The follower 10a comprises a case 14 also made of plastic which is integral with the base 30. This internally hollow case is fixed and attached to the first area 32 of the base 30. The follower 10a also comprises an elastic element 12 which is a spring separated from the contact element 11.

The case 14 of the follower 10a comprises a cover comprising a front wall with a circular opening which faces the guide section 20a of the support 40. The cover is part of the case 14, being attached thereto with a material performing the function of a hinge. Once the contact element 11 and the elastic element 12 have been introduced into the case 14, this cover is lowered onto the base of the case 14 closing it, the cover comprising to that end engagement elements and the case 14 comprising protrusions which engage the engagement elements. In this second embodiment of the base 30, like in the first embodiment, the end of the contact element 11 projecting from the front wall of the cover of the follower 10a can be housed in each of the housings 21 of the guide section 20a, such that each of the housings 21 defines a gas flow adjustment level. In the axial movement of the shaft 120, and therefore of the support 40, the contact element 11 always contacts a housing 21 of the guide section 20a.

## Claims

1. Gas valve for a cooking appliance, comprising a tactile feedback device, the valve (100) comprising a valve body (110) and an axially movable rotating shaft (120) coupled to said valve body (110), the gas flow through the valve (100) being changed by means of rotation of the shaft (120), and the tactile feedback device (200) comprising a fixed portion and a rotating portion rotating integrally with the shaft (120), one of said portions comprising at least one follower (10a, 10b) arranged radially with respect to the shaft (120) and the other one of said portions comprising at least one circular guide section (20a, 20b) which comprises a plurality of contiguous housings (21) and guides the follower (10a, 10b) to provide a tactile sensation during rotation of the shaft (120), wherein the fixed portion comprises a base (30) fixed to the valve body (110) and wherein the rotating portion comprises a support, **characterized in that** the tactile feedback device is arranged outside the gas valve (100), and **in that** the support (40) of the rotating portion is fixed to the shaft (120) of the valve (100), such that the rotating portion, in addition to rotating integrally with the shaft (120) of the valve (100), moves integrally with said shaft (120) in an axial manner.

2. Gas valve according to claim 1, wherein the support (40) comprises a cover with the shaft (120) of the valve (100) going through same and a perimetral wall (43) which is prolonged to the base (30), said perimetral wall (43) demarcating a housing in which the follower (10a, 10b) and the guide section (20a, 20b) are at least partially housed.

3. Gas valve according to claim 2, wherein the follower (10a, 10b) is arranged on the base (30) and the guide section (20a, 20b) is arranged on the inner face of the perimetral wall (43).

4. Gas valve according to claim 2, wherein the follower (10a, 10b) is arranged fixed to the inside of the support (40) and the guide section (20a, 20b) is arranged in a side wall of a platform (35) arranged on the base (30).

5. Gas valve according to claim 1, wherein the support (40) comprises a cover with the shaft (120) of the valve (100) going through same and a perimetral wall (43') which is prolonged to the base (30), the contour of said perimetral wall (43') comprising the guide section (20a, 20b), the follower (10a, 10b) being arranged in the base (30).

6. Gas valve according to any of the preceding claims, wherein the support (40) of the tactile feedback device (200) is configured to push an activation pushbutton (61) when said support (40) moves axially towards the valve body (110) together with the shaft (120) of the gas valve (100).

7. Gas valve according to claim 6, wherein the base (30) of the tactile feedback device comprises a lateral area (33) in which there is arranged a switch (60), the switch (60) comprising the activation pushbutton (61).

8. Gas valve according to any of the preceding claims, wherein the support (40) of the tactile feedback device (200) comprises a cam (50) configured to push an activation pushbutton (71) when said support (40) rotates together with the shaft (120) of the gas valve (100), the cam (50) preferably being integral with the support (40) of the tactile feedback device (200).

9. Gas valve according to claim 8, wherein the base (30) comprises a switch (70) comprising the activation pushbutton (71) which is pushed by the cam (50) of the support (40).

10. Gas valve according to any of the preceding claims, wherein the guide section (20a, 20b) comprises a projecting segment (22), said segment (22) defining an angular area (B) in which the follower (10a, 10b) cannot be positioned, the shaft (120) moving out of said angular area (B).

11. Gas valve according to any of the preceding claims, wherein the guide section (20a, 20b) comprises a guide section (20a) guiding a follower (10a) to provide a tactile sensation in a plurality of gas adjustment levels which correspond with the housings (21) of said guide section (20a, 20b).

12. Gas valve according to claim 11, wherein the guide section (20a, 20b) comprises a second guide section (20b) guiding a second follower (10b), the second follower (10b) sliding on the housings (21) of the second guide (20b) to provide a tactile sensation.

13. Gas valve according to any of the preceding claims, wherein the follower (10a, 10b) comprises a contact element (11) contacting the guide section (20a, 20b), and an elastic element (12) coupling the contact element (11) to the base (30) or the support (40), the contact element (11) being a ball, and the elastic element (12) being a part integral with or separate from the contact element (11), or the contact element (11) being a solid or hollow cylinder, and the elastic element (12) being a part integral with or separate from the contact element (11), the hollow cylinder being clipped in the elastic element (12) and having rotational freedom.

14. Gas valve according to any of the preceding claims, wherein the base (30) and the support (40) are plastic parts, the follower (10a, 10b) and the guide section (20a, 20b) being integral with the base (30) or the support (40).

15. Cooking appliance **characterized in that** it comprises at least one gas valve (100) according to any of the preceding claims.

## Patentansprüche

1. Gasventil für ein Kochgerät mit einer Vorrichtung für taktiles Feedback, wobei das Ventil (100) einen Ventilkörper (110) und einen axial verschiebbaren, mit dem genannten Ventilkörper (110) verbundenen drehbaren Schaft (120) umfasst, wobei der Gasfluss durch das Ventil (100) durch die Drehung des Schafts (120) verändert wird und die Vorrichtung (200) für taktiles Feedback einen festen und einen mit dem Schaft (120) einstückig drehbaren Teil umfasst, wobei einer der genannten Teile mindestens einen radial zum Schaft (120) angeordneten Mitnehmer (10a, 10b) und der andere der genannten Teile mindestens ein kreisförmiges Führungsstück (20a, 20b) umfasst, das eine Vielzahl von aneinandergrenzenden Gehäusen (21) aufweist und zur Erzeugung einer Tastempfindung bei Drehung des Schafts (120) den Mitnehmer (10a, 10b) führt, wobei der feststehende Teil eine am Ventilkörper (110) befestigte Basis (30) und der drehbare Teil einen Tragkörper aufweist, **dadurch gekennzeichnet, dass** die Vorrichtung für taktiles Feedback außerhalb des Gasventils (100) angeordnet ist und dass der Tragkörper (40) des drehbaren Teils so am Schaft (120) des Ventils (100) befestigt ist, dass sich der drehbare Teil zusätzlich zur Drehung einstückig mit dem genannten Schaft (120) des Ventils (100) axial verschiebt.

2. Gasventil nach Anspruch 1, wobei der Tragkörper (40) eine Abdeckung, durch die der Schaft (120) des Ventils (100) hindurchtritt, und eine sich zur Basis (30) erstreckende umlaufende Wand (43) aufweist, wobei die genannte umlaufende Wand (43) ein Gehäuse umschließt, in dem der Mitnehmer (10a, 10b) und das Führungsstück (20a, 20b) zumindest teilweise aufgenommen sind.

3. Gasventil nach Anspruch 2, wobei der Mitnehmer (10a, 10b) auf der Basis (30) und das Führungsstück (20a, 20b) an der Innenseite der umlaufenden Wand (43) angeordnet ist.

4. Gasventil nach Anspruch 2, wobei der Mitnehmer (10a, 10b) fest an der Innenseite des Tragkörpers (40) angeordnet ist und das Führungsstück (20a, 20b) an einer Seitenwand einer auf der Basis (30) angeordneten Plattform (35) angeordnet ist.

5. Gasventil nach Anspruch 1, wobei der Tragkörper (40) eine Abdeckung, durch die der Schaft (120) des Ventils (100) hindurchtritt, und eine sich zur Basis (30) erstreckende umlaufende Wand (43') aufweist, wobei die Umrisslinie der genannten umlaufenden Wand (43') das Führungsstück (20a, 20b) aufnimmt und der Mitnehmer (10a, 10b) auf der Basis (30) angeordnet ist.

6. Gasventil nach einem der vorstehenden Ansprüche, wobei der Tragkörper (40) der Vorrichtung für taktiles Feedback (200) dazu ausgelegt ist, einen Auslösedrücker (61) zu betätigen, wenn sich der genannte Tragkörper (40) zusammen mit dem Schaft (120) des Gasventils (100) axial in Richtung des Ventilkörpers (110) verschiebt.

7. Gasventil nach Anspruch 6, wobei die Basis (30) der Vorrichtung für taktiles Feedback einen seitlichen Bereich (33) mit einem darin angeordneten Schalter (60) aufweist, wobei der Schalter (60) den Auslösedrücker (61) enthält.

8. Gasventil nach einem der vorstehenden Ansprüche, wobei der Tragkörper (40) der Vorrichtung für taktiles Feedback (200) einen Nocken (50) umfasst, der dazu ausgebildet ist, bei Drehung des genannten Tragkörpers (40) zusammen mit dem Schaft (120) des Gasventils (100) einen Auslösedrücker (71) zu betätigen, wobei der Nocken (50) vorzugsweise eine Einheit mit dem Tragkörper (40) der Vorrichtung für taktiles Feedback (200) bildet.

9. Gasventil nach Anspruch 8, wobei die Basis (30) einen Schalter (70) aufweist, der den durch den Nocken (50) des Tragkörpers (40) betätigten Auslösedrücker (71) enthält.

10. Gasventil nach einem der vorstehenden Ansprüche, wobei das Führungsstück (20a, 20b) ein vorstehendes Segment (22) aufweist, wobei das genannte Segment (22) einen Winkelbereich (B) definiert, in dem der Mitnehmer (10a, 10b) nicht positioniert werden kann, wobei sich der Schaft (120) aus dem genannten Winkelbereich (B) heraus bewegt.

11. Gasventil nach einem der vorstehenden Ansprüche, wobei das Führungsstück (20a, 20b) ein Führungsstück (20a) umfasst, das zum Erzeugen einer Tastempfindung in einer Vielzahl von Gaseinstellstufen, die den Gehäusen (21) des genannten Führungsstücks (20a, 20b) entsprechen, einen Mitnehmer (10a) führt.

12. Gasventil nach Anspruch 11, wobei das Führungsstück (20a, 20b) ein zweites Führungsstück (20b) umfasst, das einen zweiten Mitnehmer (10b) führt, wobei der zweite Mitnehmer (10b) zum Erzeugen einer Tastempfindung auf den Gehäusen (21) der zweiten Führung (20b) gleitet.

13. Gasventil nach einem der vorstehenden Ansprüche, wobei der Mitnehmer (10a, 10b) ein das Führungsstück (20a, 20b) berührendes Kontaktelement (11) und ein das Kontaktelement (11) mit der Basis (30) oder dem Tragkörper (40) verbindendes elastisches Element (12) aufweist, wobei das Kontaktelement (11) eine Kugel ist und das elastische Element (12) ein mit dem Kontaktelement (11) einstückiges oder von diesem getrenntes Teil ist, oder wobei das Kontaktelement (11) ein massiver oder hohler Zylinder ist und das elastische Element (12) ein mit dem Kontaktelement (11) einstückiges oder von diesem getrenntes Teil ist, wobei der hohle Zylinder frei drehbar in das elastische Element (12) eingeklemmt ist.

14. Gasventil nach einem der vorstehenden Ansprüche, bei dem die Basis (30) und der Tragkörper (40) Kunststoffteile sind, wobei der Mitnehmer (10a, 10b) und das Führungsstück (20a, 20b) einstückig mit der Basis (30) oder dem Tragkörper (40) ausgebildet sind.

15. Kochgerät, **dadurch gekennzeichnet, dass** es mindestens ein Gasventil (100) nach einem der vorstehenden Ansprüche umfasst.

## Revendications

1. Soupape de gaz pour un appareil de cuisson, comprenant un dispositif de rétroaction tactile, la soupape (100) comprenant un corps de soupape (110) et un arbre rotatif axialement mobile (120) couplé audit corps de soupape (110), l'écoulement de gaz à travers la soupape (100) étant modifié au moyen de la rotation de l'arbre (120), et le dispositif de retour tactile (200) comprenant une partie fixe et une partie rotative tournant intégralement avec l'arbre (120), l'une desdites parties comprenant au moins un suiveur (10a, 10b) disposé radialement par rapport à l'arbre (120) et l'autre desdites parties comprenant au moins une section de guidage circulaire (20a, 20b) qui comprend une pluralité de logements contigus (21) et guide le suiveur (10a, 10b) pour fournir une sensation tactile pendant la rotation de l'arbre (120), dans lequel la partie fixe comprend une base (30) fixée au corps de soupape (110) et dans lequel la partie rotative comprend un support, **caractérisé en ce que** le dispositif de retour tactile est agencé à l'extérieur de la soupape à gaz (100), et **en ce que** le support (40) de la partie rotative est fixé à l'arbre (120) de la soupape (100), de sorte que la partie rotative, en plus de tourner intégralement avec l'arbre (120) de la soupape (100), se déplace intégralement avec ledit arbre (120) d'une manière axiale.

2. Soupape de gaz selon la revendication 1, dans laquelle le support (40) comprend un couvercle traversé par l'arbre (120) de la soupape (100) et une paroi périmétrique (43) qui se prolonge sur la base (30), ladite paroi périmétrique (43) délimitant un logement dans lequel le suiveur (10a, 10b) et la section de guidage (20a, 20b) sont au moins partiellement logés.

3. Soupape de gaz selon la revendication 2, dans laquelle le suiveur (10a, 10b) est disposé sur la base (30) et la section de guidage (20a, 20b) est disposée sur la face interne de la paroi périmétrique (43).

4. Soupape de gaz selon la revendication 2, dans laquelle le suiveur (10a, 10b) est disposé fixé à l'intérieur du support (40) et la section de guidage (20a, 20b) est disposée dans une paroi latérale d'une plateforme (35) disposée sur la base (30).

5. Soupape de gaz selon la revendication 1, dans laquelle le support (40) comprend un couvercle traversé par l'arbre (120) de la soupape (100) et une paroi périmétrique (43') qui se prolonge sur la base (30), le contour de ladite paroi périmétrique (43') comprenant la section de guidage (20a, 20b), le suiveur (10a, 10b) étant disposé dans la base (30).

6. Soupape de gaz selon l'une quelconque des revendications précédentes, dans laquelle le support (40) du dispositif de retour tactile (200) est configuré pour pousser un bouton poussoir d'activation (61) lorsque ledit support (40) se déplace axialement vers le corps de soupape (110) conjointement avec l'arbre (120) de la soupape de gaz (100).

7. Soupape de gaz selon la revendication 6, dans laquelle la base (30) du dispositif de retour tactile comprend une zone latérale (33) dans laquelle est disposé un interrupteur (60), l'interrupteur (60) comprenant le bouton-poussoir d'activation (61).

8. Soupape de gaz selon l'une quelconque des revendications précédentes, dans laquelle le support (40) du dispositif de retour tactile (200) comprend une came (50) configurée pour pousser un bouton poussoir d'activation (71) lorsque ledit support (40) tourne conjointement avec l'arbre (120) de la soupape de gaz (100), la came (50) étant de préférence solidaire du support (40) du dispositif de retour tactile (200).

9. Soupape de gaz selon la revendication 8, dans laquelle la base (30) comprend un interrupteur (70) comprenant le bouton poussoir d'activation (71) qui est poussé par la came (50) du support (40).

10. Soupape de gaz selon l'une quelconque des revendications précédentes, dans laquelle la section de guidage (20a, 20b) comprend un segment en saillie (22), ledit segment (22) définissant une zone angulaire (B) dans laquelle le suiveur (10a, 10b) ne peut pas être positionné, l'arbre (120) se déplaçant hors de ladite zone angulaire (B).

11. Soupape de gaz selon l'une quelconque des revendications précédentes, dans laquelle la section de guidage (20a, 20b) comprend une section de guidage (20a) guidant un suiveur (10a) pour fournir une sensation tactile dans une pluralité de niveaux de réglage de gaz qui correspondent aux logements (21) de ladite section de guidage (20a, 20b).

12. Soupape de gaz selon la revendication 11, dans laquelle la section de guidage (20a, 20b) comprend une deuxième section de guidage (20b) guidant un deuxième suiveur (10b), le deuxième suiveur (10b) glissant sur les logements (21) du deuxième guide (20b) pour fournir une sensation tactile.

13. Soupape de gaz selon l'une quelconque des revendications précédentes, dans laquelle le suiveur (10a, 10b) comprend un élément de contact (11) en contact avec la section de guidage (20a, 20b), et un élément élastique (12) couplant l'élément de contact (11) à la base (30) ou au support (40), l'élément de contact (11) étant une bille, et l'élément élastique (12) étant une partie intégrante ou séparée de l'élément de contact (11), ou l'élément de contact (11) étant un cylindre plein ou creux, et l'élément élastique (12) étant une partie intégrante ou séparée de l'élément de contact (11), le cylindre creux étant encliqueté dans l'élément élastique (12) et ayant une liberté de rotation.

14. Soupape de gaz selon l'une quelconque des revendications précédentes, dans laquelle la base (30) et le support (40) sont des pièces en matière plastique, le suiveur (10a, 10b) et la section de guidage (20a, 20b) étant solidaires de la base (30) ou du support (40).

15. Appareil de cuisson **caractérisé en ce qu'**il comprend au moins une soupape de gaz (100) selon l'une quelconque des revendications précédentes.
